# EUROPÄISCHE PATENTANMELDUNG

(11) **EP 4 275 955 A1**
(43) Veröffentlichungstag der Anmeldung: **15.11.2023**
(21) Anmeldenummer: 22172807.4
(22) Anmeldetag: 11.05.2022
(51) Int. Cl.: B60Q 1/00, B60Q 1/24, B60Q 1/26, B60Q 1/32, B62D 33/04, F21W 103/15

(54) **NUTZFAHRZEUGAUFBAU MIT WENIGSTENS EINEM OBEREN PROFILELEMENT**

(71) Anmelder: Schmitz Cargobull AG, 48341 Altenberge (DE)
(72) Erfinder: BEELMANN, Reinhard, 45721 Haltern am See (DE)
(74) Vertreter: Cohausz & Florack

(57) **Zusammenfassung**

Beschrieben und dargestellt ist ein Nutzfahrzeugaufbau (1), insbesondere Kofferaufbau (1), vorzugsweise für einen Lastkraftwagen, Anhänger oder Sattelauflieger, mit wenigstens einem sich wenigstens im Wesentlichen in Längsrichtung und/oder Querrichtung des Nutzfahrzeugaufbaus (1) erstreckenden Profilelement (7,8) und mit wenigstens einem von außerhalb des Nutzfahrzeugaufbaus (1) an dem wenigstens einen Profilelement (7,8) montierten, insbesondere elektrischen, Funktionselement (9,10), insbesondere Seitenmarkierungsleuchte und/oder Umfeldbeleuchtung, wobei das wenigstens eine Funktionselement (9,10) in wenigstens einer nach außen offenen und sich in Längsrichtung des Profilelements (7,8) erstreckenden Montagenut (15) des Profilelements (7,8) gehalten ist. Um eine flexiblere und besser an unterschiedliche Arten von Funktionselementen angepasste Herstellung des Nutzfahrzeugaufbaus zu ermöglichen, ist vorgesehen, dass das wenigstens eine Profilelement (7,8) wenigstens ein wenigstens im Wesentlichen in einem oberen Drittel, insbesondere oberen Viertel, des Nutzfahrzeugaufbaus (1) angeordnetes oberes Profilelement (7) umfasst.

## Beschreibung

Die Erfindung betrifft einen Nutzfahrzeugaufbau, insbesondere Kofferaufbau, vorzugsweise für einen Lastkraftwagen, Anhänger oder Sattelauflieger, mit wenigstens einem sich wenigstens im Wesentlichen in Längsrichtung und/oder Querrichtung des Nutzfahrzeugaufbaus erstreckenden Profilelement und mit wenigstens einem von außerhalb des Nutzfahrzeugaufbaus an dem wenigstens einen Profilelement montierten, insbesondere elektrischen, Funktionselement, insbesondere Seitenmarkierungsleuchte und/oder Umfeldbeleuchtung, wobei das wenigstens eine Funktionselement in wenigstens einer nach außen offenen und sich in Längsrichtung des Profilelements erstreckenden Montagenut des Profilelements gehalten ist.

Nutzfahrzeuge sind in unterschiedlichen Ausgestaltungen bekannt, etwa in Form von Lastkraftwagen, Anhängern oder Sattelaufliegern. Dabei sind die Nutzfahrzeuge unabhängig von ihrer Ausgestaltung insbesondere für den Transport von Gütern, also der zu transportierenden Ladung, überwiegend im öffentlichen Straßenverkehr vorgesehen. Zu diesem Zweck weisen die bekannten Nutzfahrzeuge typischerweise einen Aufbau auf, der einen Laderaum für die Aufnahme der zu transportierenden Ladung bereitstellt. Nutzfahrzeugaufbauten sind in unterschiedlichen Arten bekannt.

Beispielsweise sind sogenannte Planenaufbauten bekannt, bei denen wenigstens eine Seitenwand und/oder ein Dach durch wenigstens eine Plane verschlossen ist. Die Stirnwand ist bei Planenaufbauten meist als feste Wand ausgebildet, während die Rückwand regelmäßig im Wesentlichen durch zwei Rückwandtüren gebildet wird, um den Laderaum bedarfsweise von hinten zu beladen. Wenn die wenigstens eine Plane entlang der Seitenwand verschoben werden kann, spricht man auch von sogenannten Curtainsidern.

Im Gegensatz zu Planenaufbauten sind bei sogenannten Kofferaufbauten die Seitenwände und das Dach durch feste Wände verschlossen. Dabei sind die Seitenwände, das Dach, die Stirnwand und die Rückwandtüren von Kofferaufbauten regelmäßig jeweils wenigstens im Wesentlichen durch wenigstens ein Paneel gebildet, das typischerweise zwei strukturgebende Decklagen aufweist, zwischen denen eine Kernlage aus einem geschäumten Kunststoff vorgesehen ist. Die bedarfsweise mehrlagig ausgebildeten Decklagen dienen insbesondere zur Aussteifung der Paneele. Daher weisen die Decklagen für gewöhnlich wenigstens eine Schicht aus einem Metall und/oder einem faserverstärkten Kunststoff auf.

Da Kofferaufbauten geschlossen sind, werden Kofferaufbauten in besonderem Maße für den Transport von feuchtigkeitsempfindlichen Gütern, also den sogenannten Trockentransport, verwendet. Da die Kernlage aus geschäumtem Kunststoff eine hohe thermische Isolation bereitstellen kann, sind entsprechende, als Kühlkofferaufbauten bezeichnete Kofferaufbauten in ganz besonderem Maße für den Transport von temperaturempfindlichen Gütern, also beispielsweise für den sogenannten Kühltransport, vorgesehen. Um den Laderaum von Kühlkofferaufbauten temperieren, insbesondere kühlen, zu können, weisen entsprechende Nutzfahrzeuge häufig eine sogenannte Transportkältemaschine auf, die Kühlluft erzeugt und in den Laderaum hineinbläst. Parallel dazu saugt die Transportkältemaschine Luft aus dem Laderaum an, um die Luft abzukühlen und als Kühlluft zurück in den Laderaum zu blasen.

Unabhängig von der Art des Aufbaus sind Nutzfahrzeugaufbauten an den Außenseiten typischerweise mit Funktionselementen ausgestattet, wie beispielsweise elektrischen Funktionselementen etwa in Form von Seitenmarkierungsleuchten zur aktiven Markierung der äußeren seitlichen Kontur des Nutzfahrzeugaufbaus und/oder einer Umfeldbeleuchtung zum Ausleuchten der Umgebung des Nutzfahrzeugaufbaus. Dabei sind die Funktionselemente häufig von außerhalb des Nutzfahrzeugaufbaus an sich längs oder quer zum Nutzfahrzeugaufbau erstreckenden Profilelementen montiert, die dazu eine sich in Längsrichtung des Profilelements erstreckende Montagenut aufweisen, in der die Profilelemente gehalten sind. Da beispielsweise bei Seitenmarkierungsleuchten ein maximaler Abstand zur Fahrbahn nicht überschritten werden darf, sind entsprechende Profilelemente typischerweise an einem unteren Rand des Nutzfahrzeugaufbaus vorgesehen. Es besteht der Bedarf, eine flexiblere und besser an Funktionselemente unterschiedlicher Art angepasste Herstellung des Nutzfahrzeugaufbaus zu ermöglichen.

Daher liegt der vorliegenden Erfindung die Aufgabe zugrunde, den Nutzfahrzeugaufbau der eingangs genannten und zuvor näher erläuterten Art derart auszugestalten und weiterzubilden, dass eine flexiblere und besser an unterschiedliche Arten von Funktionselementen angepasste Herstellung des Nutzfahrzeugaufbaus ermöglicht wird.

Diese Aufgabe ist bei einem Nutzfahrzeugaufbau nach dem Oberbegriff von Anspruch 1 dadurch gelöst, dass das wenigstens eine Profilelement wenigstens ein wenigstens im Wesentlichen in einem oberen Drittel, insbesondere oberen Viertel, des Nutzfahrzeugaufbaus angeordnetes oberes Profilelement umfasst.

Indem wenigstens ein entsprechendes oberes Profilelement wenigstens im Wesentlichen in einem oberen Drittel des Nutzfahrzeugaufbaus angeordnet wird, kann dort in einfacher Weise wenigstens ein Funktionselement montiert werden. Die Erfindung hat erkannt, dass für einige Arten von Funktionselementen eine Anordnung in einem oberen Bereich des Nutzfahrzeugaufbaus bedarfsweise zusätzlich zu einer Anordnung in einem unteren Bereich des Nutzfahrzeugaufbaus besonders zweckmäßig ist. So kann beispielsweise mit entsprechend montierten Kameras aufgrund des günstigeren Winkels ein deutlich größerer Bereich des Nutzfahrzeugaufbaus und/oder der Umgebung des Nutzfahrzeugaufbaus erfasst werden. Zudem kann mit Konturmarkierungsleuchtmitteln, die in einem entsprechenden Bereich des Nutzfahrzeugaufbaus angeordnet sind, die Erkennbarkeit der Höhendimension des Nutzfahrzeugaufbaus für andere Verkehrsteilnehmer deutlich verbessert werden. Insgesamt wird also eine flexiblere und besser an unterschiedliche Funktionselemente angepasste Herstellung ermöglicht. Dies gilt umso mehr, wenn das wenigstens eine obere Profilelement in einem oberen Viertel des Nutzfahrzeugaufbaus angeordnet ist.

Dabei kann mit einer Anordnung in einem oberen Drittel oder oberen Viertel des Nutzfahrzeugaufbaus vorzugsweise eine Anordnung in einem Bereich des Nutzfahrzeugaufbaus gemeint sein, der sich vom Dach des Nutzfahrzeugaufbaus über ein Drittel oder ein Viertel der Höhe des Nutzfahrzeugaufbaus nach unten erstreckt.

Bei dem Nutzfahrzeugaufbau kann es sich beispielsweise um einen Planenaufbau handeln. Eine besonders einfache Realisierung des von außen zugänglichen oberen Profilelements kann allerdings bei Kofferaufbauten erfolgen, da diese keine Plane aufweisen, die das obere Profilelement verdecken kann. Unabhängig davon, ob es sich bei dem Nutzfahrzeugaufbau um einen Planenaufbau oder Kofferaufbau handelt, kann der Nutzfahrzeugaufbau für einen Lastkraftwagen, Anhänger oder Sattelauflieger vorgesehen sein.

Das wenigstens eine Profilelement erstreckt sich wenigstens im Wesentlichen in Längsrichtung und/oder in Querrichtung des Nutzfahrzeugaufbaus. Das wenigstens eine Profilelement kann sich also wenigstens im Wesentlichen in einer horizontalen Ebene bezogen auf den Nutzfahrzeugaufbau erstrecken. Unabhängig davon kann es sich hinsichtlich einer einfachen Montage des Funktionselements anbieten, wenn sich das wenigstens eine Profilelement wenigstens im Wesentlichen in Längsrichtung oder wenigstens im Wesentlichen in Querrichtung des Nutzfahrzeugaufbaus erstreckt. Unabhängig von der Anordnung des Profilelements kann das Profilelement bevorzugt aus einem Metallwerkstoff, insbesondere Stahlwerkstoff hergestellt sein, um eine hinreichende Stabilität bereitzustellen.

Das wenigstens eine Funktionselement ist von außerhalb des Nutzfahrzeugaufbaus an dem wenigstens einen Profilelement montiert. Das wenigstens eine Funktionselement ist also insbesondere nicht aus einem Laderaum zur Aufnahme von Ladung des Nutzfahrzeugaufbaus an dem Profilelement montiert, sondern vorzugsweise aus der Umgebung des Nutzfahrzeugaufbaus. Unabhängig davon ist mit der wenigstens einen nach außen offenen Montagenut des Profilelements insbesondere eine solche gemeint, die zur Umgebung des Nutzfahrzeugaufbaus hin offen ist, und zwar vorzugsweise bezogen auf einen geschlossenen Zustand des Nutzfahrzeugaufbaus.

Das wenigstens eine Funktionselement ist insbesondere ein elektrisches, also insbesondere mit elektrischem Strom zu versorgendes, Funktionselement. Alternativ oder zusätzlich kann es sich bei dem wenigstens einen Funktionselement aber auch um ein nicht elektrisches Funktionselement, wie beispielsweise eine Blende, handeln.

Gemäß einer ersten besonders bevorzugten Ausgestaltung des Nutzfahrzeugaufbaus ist neben dem wenigstens einen oberen Profilelement wenigstens ein wenigstens im Wesentlichen in einem unteren Drittel des Nutzfahrzeugaufbaus angeordnetes unteres Profilelement vorgesehen. Dann kann auch an dem wenigstens einen unteren Profilelement wenigstens ein Funktionselement von außerhalb des Nutzfahrzeugaufbaus montiert sein. So wird eine auf das jeweilige Funktionselement abgestimmte Anordnung am Nutzfahrzeugaufbau ermöglicht. Dies gilt umso mehr, wenn auch das wenigstens eine untere Profilelement eine nach außen offene und sich in Längsrichtung des Profilelements erstreckende Montagenut aufweist, an dem wenigstens ein Funktionselement gehalten sein kann. Die Montagenut ermöglicht auf einfache Weise eine Montage an vielen unterschiedlichen Stellen des Profilelements. Unabhängig davon kann es zweckmäßig sein, wenn das wenigstens eine untere Profilelement wenigstens im Wesentlichen in einem unteren Viertel des Nutzfahrzeugaufbaus angeordnet ist.

Grundsätzlich können die Montagenuten des oberen Profilelements und des unteren Profilelements unterschiedlich ausgebildet sein. Es ist jedoch bevorzugt, wenn wenigstens ein Querschnitt der wenigstens einen Montagenut des oberen Profilelements und wenigstens ein Querschnitt der wenigstens einen Montagenut des unteren Profilelements wenigstens im Wesentlichen gleich ausgebildet sind. So kann ein Funktionselement wahlweise am oberen oder am unteren Profilelement montiert werden, ohne dass die Art und Weise der Montage angepasst werden müsste. Mithin wird einfach und kostengünstig eine flexible Anordnung der Funktionselemente ermöglicht. Dies gilt umso mehr, wenn die wenigstens eine Montagenut des oberen Profilelements und die wenigstens eine Montagenut des unteren Profilelements nicht nur abschnittsweise, sondern wenigstens im Wesentlichen über die gesamte Länge wenigstens im Wesentlichen gleiche Querschnitte aufweisen.

Wenn zudem nicht nur die Montagenuten der Profilelemente gleiche Querschnitte aufweisen, sondern wenigstens ein Querschnitt des oberen Profilelement und wenigstens ein Querschnitt des unteren Profilelements wenigstens im Wesentlichen gleich ausgebildet sind, kann der Aufwand zur Herstellung des Nutzfahrzeugaufbaus reduziert werden. Dies gilt umso mehr, wenn das wenigstens eine obere Profilelement und das wenigstens eine untere Profilelement wenigstens im Wesentlichen über die gesamte Länge gleiche Querschnitte aufweisen. Dann können nämlich die gleichen Profilelemente sowohl als obere als auch als untere Profilelemente eingesetzt werden und es müssen nicht verschieden ausgestaltete Profilelemente vorgesehen werden. Bedarfsweise können die Profilelemente lediglich unterschiedlich ausgerichtet sein, je nachdem ob sie als oberes oder unteres Profilelement eingesetzt werden.

Unabhängig davon, ob neben dem oberen Profilelement auch das untere Profilelement vorgesehen ist, kann das wenigstens eine Profilelement ein Wandprofil einer Wand des Nutzfahrzeugaufbaus sein. Wandprofile bieten sich aufgrund ihrer Anordnung im Nutzfahrzeugaufbau besonders für die Montage von Funktionselementen an. Ein Seitenwandprofil einer Seitenwand kann dabei aufgrund der typischerweise großen Länge besonders flexible Montagemöglichkeiten bieten.

Grundsätzlich wird unter einer Wand des Nutzfahrzeugaufbaus vorzugsweise eine einen Laderaum zur Aufnahme von Ladung abschnittsweise begrenzende Wand verstanden. Mit einer Seitenwand ist insbesondere eine Wand gemeint, die den Laderaum seitlich begrenzt.

Unabhängig von einer Ausbildung als Wandprofil kann es sich anbieten, wenn das wenigstens eine obere Profilelement an einem oberen Rand einer Wand, insbesondere Seitenwand, des Nutzfahrzeugaufbaus angeordnet ist. An den Rändern der Wände von Nutzfahrzeugaufbauten sind typischerweise ohnehin Profilelemente vorhanden, sodass kein zusätzliches Profilelement vorgesehen werden muss. Aus prinzipiell demselben Grund kann es sich alternativ oder zusätzlich anbieten, wenn das wenigstens eine untere Profilelement an einem unteren Rand einer Wand, insbesondere Seitenwand, des Nutzfahrzeugaufbaus angeordnet ist. Dabei kann es zu einer einfachen Montage der Funktionselemente beitragen, wenn das wenigstens eine obere Profilelement den oberen Rand der Wand und/oder das wenigstens eine untere Profilelement den unteren Rand der Wand bildet. Dann ist das entsprechende Profilelement also vorzugsweise nicht nur an dem Rand der Wand angeordnet, sondern bildet selbst den Rand der Wand.

Hinsichtlich einer einfachen Montage und zugleich zweckmäßigen Ausrichtung des wenigstens einen Funktionselements kann es sich anbieten, wenn die wenigstens eine Montagenut wenigstens im Wesentlichen in horizontaler Richtung bezogen auf den Nutzfahrzeugaufbau geöffnet ist. Unabhängig von der Öffnungsrichtung der Montagenut kann eine einfache und zuverlässige, insbesondere formschlüssige, Montage des Funktionselements in der Montagenut ermöglicht werden, wenn sich die wenigstens eine Montagenut in Richtung einer Montageöffnung der Montagenut wenigstens abschnittsweise verjüngt. Dabei kann sich eine beidseitige Verjüngung hinsichtlich einer zuverlässigen Montage besonders anbieten. Ganz grundsätzlich kann mit einer Montageöffnung einer Montagenut insbesondere eine Öffnung der Montagenut gemeint sein, die sich in Längsrichtung der Montagenut erstreckt.

Alternativ oder zusätzlich kann es sich im Hinblick auf die Montagenut anbieten, wenn gegenüberliegende Längsränder einer Montageöffnung der wenigstens einen Montagenut unterschiedliche Abstände zu einem Nutgrund der Montagenut aufweisen. Dies kann sich im Hinblick auf die Montage unterschiedlich ausgestalteter Funktionselemente in der Montagenut anbieten und so zu einer flexiblen Nutzung der Montagenut beitragen. Dabei kann mit dem Abstand eines Längsrands der Montageöffnung zum Nutgrund der Montagenut insbesondere der Abstand senkrecht zum Nutgrund gemeint sein. Unabhängig davon kann es zweckmäßig sein, wenn der Längsrand der Montageöffnung, der den geringeren Abstand zum Nutgrund aufweist, bei dem wenigstens einen oberen Profileelement den oberen Rand der Montageöffnung bildet. Alternativ oder zusätzlich kann vorgesehen sein, dass der Längsrand der Montageöffnung, der den geringeren Abstand zum Nutgrund aufweist, bei dem wenigstens einen unteren Profilelement den unteren Rand der Montageöffnung bildet.

Unabhängig von der Ausgestaltung der Montagenut kann das wenigstens eine Profilelement wenigstens einen Aufnahmeraum zur Aufnahme von überschüssigem Klebstoff wenigstens einer Klebeverbindung aufweisen. So kann in dem Aufnahmeraum überschüssiger Klebstoff der Klebeverbindung aufgefangen werden. Dies vereinfacht nicht nur das Herstellen der Klebeverbindung, sondern kann auch zur Aussteifung des Profilelements beitragen. Bei der Klebeverbindung kann es sich der Einfachheit halber um eine Klebeverbindung des wenigstens einen Profilelements handeln. Zwingend erforderlich ist dies jedoch nicht. Unabhängig davon kann sich der wenigstens eine Aufnahmeraum zweckmäßigerweise in Längsrichtung des Profilelements erstrecken. So wird über einen verhältnismäßig großen Bereich eine Klebstoffaufnahme ermöglicht. Dies gilt umso mehr, wenn sich der wenigstens eine Aufnahmeraum wenigstens im Wesentlichen über die gesamte Länge des Profilelements erstreckt. Alternativ oder zusätzlich kann der Aufnahmeraum grundsätzlich teilweise durch das Profilelement und teilweise durch wenigstens ein anderes Bauteil begrenzt werden. Besonders einfach und zweckmäßig ist es jedoch, wenn das wenigstens eine Profilelement den Aufnahmeraum wenigstens im Wesentlichen begrenzt. Unabhängig davon kann es zu einer zuverlässigen Klebstoffaufnahme beitragen, wenn der Aufnahmeraum im Wesentlichen geschlossen ist.

Um ein hindernisfreies Einfließen von überschüssigem Klebstoff in den Aufnahmeraum zu ermöglichen, kann der wenigstens eine Aufnahmeraum wenigstens eine, insbesondere der wenigstens einen Klebeverbindung zugewandte, Aufnahmeöffnung aufweisen. Wenn sich die wenigstens eine Aufnahmeöffnung in Längsrichtung des Profilelements erstreckt, kann in einem verhältnismäßig großen Bereich ein hindernisfreies Einfließen von Klebstoff ermöglicht werden. Dies gilt umso mehr, wenn sich die wenigstens eine Aufnahmeöffnung wenigstens im Wesentlichen über die gesamte Länge des Profilelements erstreckt.

Der wenigstens ein Aufnahmeraum kann zweckmäßigerweise wenigstens teilweise mit Klebstoff gefüllt sein. Dies kann zur Aussteifung des Profilelements beitragen. Vor diesem Hintergrund kann es bevorzugt sein, wenn der wenigstens eine Aufnahmeraum wenigstens im Wesentlichen mit Klebstoff gefüllt sein. Unabhängig davon, ob der Aufnahmeraum mit Klebstoff gefüllt ist oder nicht, kann es sich anbieten wenn der wenigstens eine Aufnahmeraum an die Montagenut des Profilelements angrenzt. Dies kann nicht nur zu einer kompakten Ausgestaltung des Profilelements beitragen, sondern auch zu einer, insbesondere seitlichen, Verstärkung der Montagenut durch den in dem Aufnahmeraum aufgenommenen Klebstoff beitragen. Aus diesen Gründen ist es besonders bevorzugt, wenn der wenigstens eine Aufnahmeraum und die Montagenut wenigstens einen gemeinsamen Profilabschnitt des Profilelements aufweisen. Alternativ oder zusätzlich kann es auch zu einer kompakten Ausgestaltung des Profilelements beitragen, wenn der wenigstens eine Aufnahmeraum von einem sich in Längsrichtung des Profilelements erstreckenden Randabschnitt des Profilelements bereitgestellt wird.

Eine einfache und zweckmäßige Integration des Profilelements in den Nutzfahrzeugaufbau wird ermöglicht, wenn ein Randabschnitt des wenigstens einen Profilelements, der sich in Längsrichtung des Profilelements erstreckt, an einer Außenseite eines Wandpaneels einer Wand, insbesondere Seitenwand, des Nutzfahrzeugaufbaus anliegt. Dabei ist mit der Außenseite des Wandpaneels vorzugsweise die einem Laderaum zur Aufnahme von Ladung abgewandte Seite des Wandpaneels gemeint. Unabhängig davon kann der Randbereich des wenigstens einen Profilelements insbesondere an einer äußeren strukturgebenden Decklage des Wandpaneels anliegen. Alternativ oder zusätzlich kann der an dem Wandpaneel anliegende Randbereich des wenigstens einen Profilelements mit dem Wandpaneel verklebt sein. Dies kann zu einer steifen Struktur beitragen.

Um in einem großen Bereich Montagemöglichkeiten für Funktionselemente bereitzustellen, und so eine besonders bedarfsgerechte Anordnung des wenigstens einen Funktionselements zu ermöglichen, kann sich das wenigstens eine Profilelement wenigstens im Wesentlichen über die gesamte Länge und/oder Breite des Nutzfahrzeugaufbaus erstrecken. Dabei ist ein sich wenigstens im Wesentlichen über die gesamte Länge des Nutzfahrzeugsaufbaus erstreckendes Profilelement aufgrund der Abmessungen besonders bevorzugt. Prinzipiell vor demselben Hintergrund kann es sich alternativ oder zusätzlich anbieten, wenn sich die wenigstens eine Montagenut wenigstens im Wesentlichen über die gesamte Länge des wenigstens einen Profilelements erstreckt.

Das wenigstens eine Funktionselement kann wenigstens ein Konturmarkierungsleuchtmittel zur aktiven Markierung der äußeren Kontur des Nutzfahrzeugaufbaus umfassen. Dies kann zur besseren Erkennbarkeit des Umrisses des Nutzfahrzeugaufbaus etwa bei schlechten Sichtverhältnissen und/oder im Dunkeln beitragen. Dabei kann an dem wenigstens einen oberen Profilelement und/oder an dem wenigstens einen unteren Profilelement wenigstens ein Konturmarkierungsleuchtmittel vorgesehen sein. Unabhängig davon kann das wenigstens eine Konturmarkierungsleuchtmittel zweckmäßigerweise eingerichtet sein, gelbes, orangenes und/oder rotes Licht auszustrahlen.

Alternativ oder zusätzlich kann das wenigstens eine Funktionselement wenigstens ein Umfeldbeleuchtungsleuchtmittel zur Beleuchtung der Umgebung des Nutzfahrzeugaufbaus umfassen. Dies kann zur aktiven Ausleuchtung der Umgebung des Nutzfahrzeugaufbaus beitragen. Dabei kann an dem wenigstens einen oberen Profilelement und/oder an dem wenigstens einen unteren Profilelement wenigstens ein Umfeldbeleuchtungsleuchtmittel vorgesehen sein. Unabhängig davon kann es zweckmäßig sein, wenn das wenigstens eine Umfeldbeleuchtungsleuchtmittel eingerichtet ist, weißes Licht auszustrahlen.

Unabhängig von entsprechenden Leuchtmitteln kann das wenigstens eine Funktionselement wenigstens eine Kamera umfassen, die zum Erfassen eines Bilds des Nutzfahrzeugaufbaus und/oder der Umgebung des Nutzfahrzeugaufbaus eingerichtet sein kann. Das von der Kamera erfasste Bild kann dann beispielsweise zusammen mit weiteren, etwa von anderen Kameras erfassten, Bildern des Nutzfahrzeugaufbaus und/oder der Umgebung des Nutzfahrzeugaufbaus zu einem Bild des Nutzfahrzeugaufbaus aus einer Vogelperspektive weiterverarbeitet werden. Auf diese Weise kann ein sogenannter Bird's-eye view von dem Nutzfahrzeugaufbau realisiert werden, der beispielsweise beim Rangieren des Nutzfahrzeugs behilflich sein kann. Unabhängig davon kann das von der Kamera erfasste Bild und/oder das weiterverarbeitete Bild aus der Vogelperspektive beispielsweise auf einer Anzeigeeinrichtung, etwa einem Bildschirm, beispielsweise in einer Fahrerkabine des Nutzfahrzeugs und/oder einer Zugmaschine angezeigt werden. Für die Montage der wenigstens einen Kamera kann sich aufgrund des Winkels insbesondere das wenigstens eine obere Profilelement anbieten. Es kann alternativ oder zusätzlich aber auch am wenigstens einen unteren Profilelement wenigstens eine Kamera vorgesehen sein.

Alternativ oder zusätzlich kann das wenigstens eine Funktionselement wenigstens einen Sensor umfassen. Der wenigstens eine Sensor kann beispielsweise ein Abstandssensor sein, der einen Abstand des Nutzfahrzeugaufbaus zu einem von dem Nutzfahrzeugaufbau beabstandeten Objekt erfassen kann. Alternativ oder zusätzlich kann der wenigstens eine Sensor ein Bewegungssensor sein, der eine in der Umgebung des Nutzfahrzeugaufbaus stattfindende Bewegung erfassen kann. Für die Montage des wenigstens einen Sensors kann sich das obere Profilelement besonders anbieten. Es kann jedoch alternativ oder zusätzlich auch am unteren Profilelement wenigstens ein entsprechender Sensor montiert sein.

Das wenigstens eine Funktionselement kann wenigstens ein LED-Band umfassen, das eine Mehrzahl von in Längsrichtung des LED-Bands verteilt angeordneten LED-Leuchtmitteln umfasst. So kann mit geringem Aufwand in einem großen Bereich des Nutzfahrzeugaufbaus eine Außenbeleuchtung realisiert werden. Dabei kann mit dem wenigstens einen LED-Band insbesondere ein solches gemeint sein, das wenigstens eine bandförmige, vorzugsweise flexible, Leiterplatte aufweist. Dann kann die Mehrzahl von LED-Leuchtmitteln an der wenigstens einen Leiterplatte angebracht und elektrisch mit der wenigstens einen Leiterplatte verbunden sein, sodass die Mehrzahl von LED-Leuchtmittel über die wenigstens eine Leiterplatte mit elektrischem Strom versorgt werden kann. Unabhängig davon wird unter einem LED-Leuchtmittel insbesondere ein Leuchtmittel verstanden, das wenigstens eine Leuchtdiode (LED) aufweist.

Die Mehrzahl von LED-Leuchtmitteln des wenigstens einen LED-Bands kann beispielsweise wenigstens ein Konturmarkierungsleuchtmittel und/oder wenigstens ein Umfeldbeleuchtungsleuchtmittel, insbesondere der vorstehend beschriebenen Art, umfassen. Alternativ oder zusätzlich kann das wenigstens eine LED-Band wenigstens eine Kamera und/oder einen Sensor, jeweils insbesondere der vorstehend beschriebenen Art, umfassen. In das LED-Band können einfach und kostengünstig weitere Funktionselemente integriert werden. Beispielsweise kann die wenigstens eine Kamera und/oder der wenigstens eine Sensor in einfacher Weise an der wenigstens einen Leiterplatte des LED-Bands angebracht und mit der Leiterplatte elektrisch verbunden sein.

Um eine besonders einfache Montage des Funktionselements zu ermöglichen, kann das wenigstens eine Funktionselement formschlüssig in der wenigstens einen Montagenut gehalten sein. Dann kann vorzugsweise das wenigstens eine Funktionselement über wenigstens eine formschlüssige Verbindung direkt oder indirekt mit der wenigstens einen Montagenut verbunden sein. Alternativ oder zusätzlich zu einem Formschluss kann das wenigstens eine Funktionselement in zuverlässiger Weise, etwa um einem Diebstahl vorzubeugen, stoffschlüssig in der Montagenut gehalten sein. Dann kann vorzugsweise das wenigstens eine Funktionselement über wenigstens eine stoffschlüssige Verbindung direkt oder indirekt mit der wenigstens einen Montagenut verbunden sein. Unabhängig davon kann das wenigstens eine Funktionselement einfach und zweckmäßig in der wenigstens einen Montagenut verklebt sein.

Das wenigstens eine Funktionselement kann grundsätzlich direkt in der wenigstens einen Montagenut montiert sein. Bevorzugt ist es jedoch, wenn das wenigstens eine Funktionselement über wenigstens ein, insbesondere sich in Längsrichtung der Montagenut erstreckendes, Adapterelement in der Montagenut gehalten ist. So können in der Montagenut unterschiedlich ausgestaltete Funktionselemente gehalten sein, ohne dass eine Anpassung der Montagenut erfolgen muss. Stattdessen kann in einfacher Weise ein entsprechend angepasstes Adapterelement verwendet werden. So kann der Aufwand zur Herstellung des Nutzfahrzeugaufbaus reduziert werden. Dies gilt umso mehr, wenn das Adapterelement einfach und kostengünstig aus einem Kunststoff hergestellt ist. Unabhängig davon kann das wenigstens eine Adapterelement zweckmäßig als Adapterprofil ausgebildet sein. Alternativ oder zusätzlich kann das wenigstens eine Funktionselement einfach und zweckmäßig in wenigstens einer sich in Längsrichtung des Adapterelements erstreckenden Adapternut des Adapterelements gehalten sein. Um durch das Adapterelement möglichst gut vor äußeren Einflüssen geschützt zu sein, kann das wenigstens eine Funktionselement dann wenigstens im Wesentlichen in der Adapternut aufgenommen sein.

Das Funktionselement kann einfach und kostengünstig formschlüssig in der Montagenut gehalten sein, wenn das wenigstens eine Funktionselement und/oder das wenigstens eine Adapterelement wenigstens eine Hinterschneidung der wenigstens einen Montagenut formschlüssig hintergreift. Dabei kann der Formschluss zweckmäßig in Richtung einer Montageöffnung der Montagenut wirken. Alternativ oder zusätzlich kann die Verbindung zwischen dem Funktionselement und der Montagenut besonders einfach gefügt werden, wenn das wenigstens eine Funktionselement und/oder das wenigstens eine Adapterelement in die wenigstens eine Montagenut eingerastet ist.

Prinzipiell aus denselben Gründen kann es sich hinsichtlich der Verbindung zwischen dem Funktionselement und dem Adapterelement anbieten, wenn das wenigstens eine Funktionselement wenigstens eine Hinterschneidung der wenigstens einen Adapternut formschlüssig hintergreift, wobei der Formschluss zweckmäßig in Richtung einer Öffnung der Adapternut wirken kann. Unabhängig davon wird ein besonders einfaches Fügen der Verbindung zwischen dem Funktionselement und dem Adapterelement ermöglicht, wenn das wenigstens eine Funktionselement in die wenigstens eine Adapternut eingerastet ist.

Nachfolgend wird die Erfindung anhand einer lediglich ein Ausführungsbeispiel darstellenden Zeichnung näher erläutert. In der Zeichnung zeigen jeweils schematisch
- Fig. 1: ein von einer Zugmaschine gezogenes Nutzfahrzeug mit einem erfindungsgemäßen Nutzfahrzeugaufbau in einer perspektivischen Ansicht,
- Fig. 2: Details des Nutzfahrzeugaufbaus aus Fig. 1 in einem oberen und einem unteren Randbereich einer Seitenwand des Nutzfahrzeugaufbaus in einem Querschnitt, und
- Fig. 3: Details des Nutzfahrzeugaufbaus aus Fig. 1 in einem oberen und einem unteren Randbereich der Seitenwand in einer Seitenansicht.

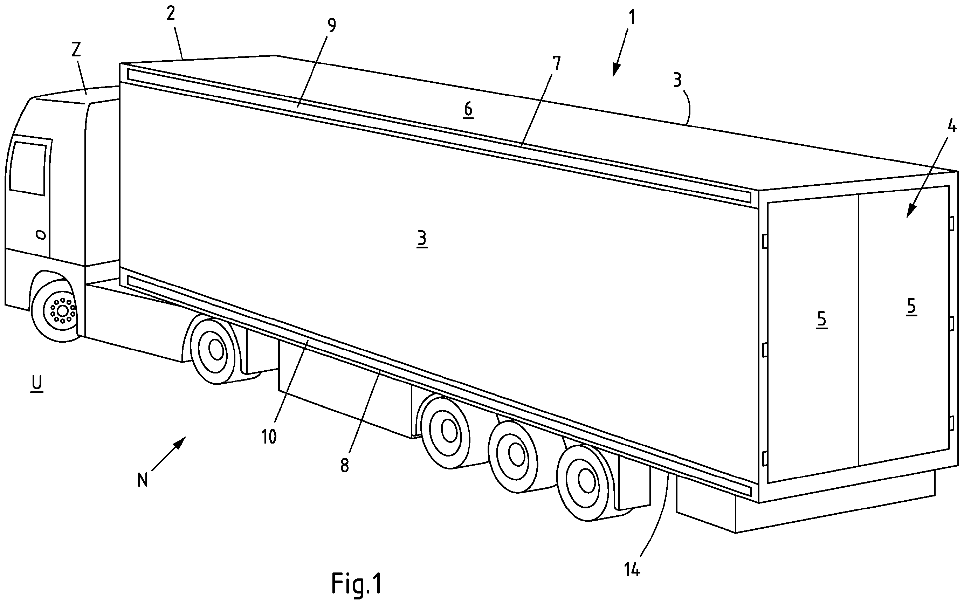

In der Fig. 1 ist ein von einer Zugmaschine Z gezogenes Nutzfahrzeug N in Form eines Sattelaufliegers in einer perspektivischen Ansicht dargestellt. Das Nutzfahrzeug N weist einen Nutzfahrzeugaufbau 1 auf, der vorliegend als Kühlkofferaufbau 1 ausgebildet ist. Der Nutzfahrzeugaufbau 1 umfasst eine einen Laderaum nach vorne begrenzende Stirnwand 2 und zwei Seitenwände 3, die den Laderaum auf gegenüberliegenden Seiten seitlich begrenzen. An der Rückseite des Nutzfahrzeugaufbaus 1 ist eine Rückwand 4 vorgesehen, die vorliegend im Wesentlichen durch zwei Rückwandtüren 5 gebildet wird. Nach oben ist der Laderaum durch ein Dach 6 verschlossen.

Die Seitenwände 3 weisen jeweils am oberen Rand ein oberes Profilelement 7 und am unteren Rand ein unteres Profilelement 8 auf, wobei sich die Profilelemente 7,8 jeweils in Längsrichtung des Nutzfahrzeugaufbaus 1 über die gesamte Länge des Nutzfahrzeugaufbaus 1 erstrecken. An den Profilelementen 7,8 ist von außerhalb des Nutzfahrzeugaufbaus 1 jeweils ein Funktionselement 9,10 befestigt. Dabei sind die Funktionselemente 9,10 vorliegend als LED-Bänder 9,10 ausgebildet, die sich jeweils entlang des zugeordneten Profilelements 7,8 über im Wesentlichen die gesamte Länge der Seitenwand 3 erstrecken und unter anderem der Ausstrahlung von Licht in die Umgebung U des Nutzfahrzeugaufbaus 1 dienen.

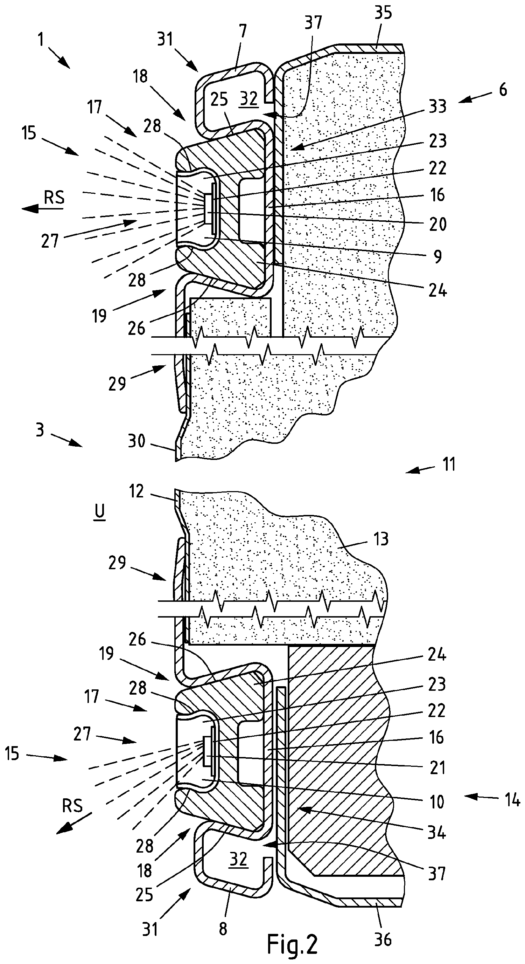

In der Fig. 2 sind Details des Nutzfahrzeugaufbaus 1 in einem oberen und einem unteren Randbereich einer der Seitenwände 3 in einem Querschnitt dargestellt. Das obere Profilelement 7 bildet den oberen Rand der Seitenwand 3 und das untere Profilelement 8 bildet den unteren Rand der Seitenwand 3. Im Übrigen ist die Seitenwand 3 im Wesentlichen durch ein Seitenwandpaneel 11 gebildet. Das Seitenwandpaneel 11 weist zwei strukturgebende Decklagen 12 aus Stahl und dazwischen eine Kernlage 13 aus geschäumtem Kunststoff auf. Dabei ist vorliegend der besseren Übersichtlichkeit wegen nur die äußere, der Umgebung U zugewandte Decklage 12 dargestellt. Die innere, dem Laderaum zugewandte Decklage 12 ist nicht dargestellt. An das obere Profilelement 7 schließt sich nach innen das Dach 6 an. An das untere Profilelement 8 schließt sich nach innen ein Boden 14 des Nutzfahrzeugaufbaus 1 an.

Das obere und das untere Profilelement 7,8 weisen vorliegend wenigstens im Wesentlichen den gleichen Querschnitt auf. Dabei sind die Profilelemente 7,8 so angeordnet sind, dass der Querschnitt des oberen Profilelements 7 horizontal gespiegelt zum Querschnitt des unteren Profilelements 8 angeordnet ist.

Die Profilelemente 7,8 weisen jeweils eine in horizontaler Richtung nach außen, zur Umgebung U des Nutzfahrzeugaufbaus 1 offene Montagenut 15 auf, die sich wenigstens im Wesentlichen über die gesamte Länge des entsprechenden Profilelements 7,8 erstreckt. Die Montagenuten 15 verjüngen sich jeweils beidseitig von einem Nutgrund 16 in Richtung einer Montageöffnung 17 der entsprechenden Montagenut 15. Dabei sind die beiden Längsränder 18,19 einer Montageöffnung 17, die die Montageöffnung 17 auf gegenüberliegenden Längsseiten begrenzen, in unterschiedlichen Abständen zum Nutgrund 16 der Montagenut 15 angeordnet. Bei dem oberen Profilelement 7 bildet der Längsrand 18 der Montageöffnung 17, der den geringeren Abstand zum Nutgrund 16 aufweist, den oberen Rand der Montageöffnung 17 und bei dem unteren Profilelement 8 den unteren Rand der Montageöffnung 17.

In den Montagenuten 15 sind die LED-Bänder 9,10 montiert. Die LED-Bänder 9,10 weisen jeweils eine Mehrzahl von LED-Leuchtmitteln 20,21 auf, die über die gesamte Länge des zugehörigen LED-Bands 9,10 verteilt angeordnet sind. Dabei ist die Mehrzahl von LED-Leuchtmitteln 20,21 an einer flexiblen Leiterplatte 22 des jeweiligen LED-Bands 9,10 angebracht und mit der Leiterplatte 22 elektrisch verbunden, sodass die LED-Leuchtmittel 20,21 über die Leiterplatte 22 mit elektrischem Strom versorgt werden können. Zum Schutz der LED-Leuchtmittel 20,21 und der Leiterplatten 22 vor Einflüssen von außen, etwa Witterungseinflüssen, weisen die LED-Bänder 9,10 jeweils ein Gehäuse 23 aus transparentem Kunststoff auf, in das die LED-Leuchtmittel 20,21 und die Leiterplatte 22 vollständig eingebettet sind.

Das in der Fig. 2 dargestellte LED-Leuchtmittel 20 des oberen LED-Bands 9 ist als orange leuchtendes Konturmarkierungsleuchtmittel 20 ausgebildet, das insbesondere der aktiven Markierung der äußeren Kontur des Nutzfahrzeugaufbaus 1 dient. Dabei ist die Hauptabstrahlrichtung RS des Konturmarkierungsleuchtmittels 20 im Wesentlichen senkrecht zu der Seitenwand 3 angeordnet. Das in der Fig. 2 dargestellte LED-Leuchtmittel 21 des unteren LED-Bands 10 ist dagegen als weiß leuchtendes Umfeldbeleuchtungsleuchtmittel 21 ausgebildet, das insbesondere der Ausleuchtung der Umgebung U des Nutzfahrzeugs N dient. Dementsprechend weist die Hauptabstrahlrichtung RS des Umfeldbeleuchtungsleuchtmittel 21 im dargestellten und insoweit bevorzugten Ausführungsbeispiel schräg nach unten bezogen auf die Seitenwand 3.

Die LED-Bänder 9,10 sind jeweils über ein sich vorliegend über wenigstens im Wesentlichen die gesamte Länge des LED-Bands 9,10 erstreckendes Adapterelement 24 aus Kunststoff in der Montagenut 15 des zugehörigen Profilelements 7,8 gehalten. Die Adapterelemente 24 sind als Adapterprofile ausgebildet, die im dargestellten und insoweit bevorzugten Ausführungsbeispiel einen etwa H-förmigen Querschnitt mit zwei seitlichen Schenkeln und einem die Schenkel verbindenden Steg aufweisen. Die Schenkel hintergreifen dabei jeweils eine Hinterschneidung 25,26 der Montagenut 15 des entsprechenden Profilelements 7,8 und halten das Adapterelement 24 auf diese Weise formschlüssig in der Montagenut 15. Zudem können die Adapterelemente 24 an den Kontaktflächen in der jeweiligen Montagenut 15 verklebt und so auch stoffschlüssig in der Montagenut 15 gehalten sein.

Zum Montieren eines Adapterelements 24 in der zugehörigen Montagenut 15 werden die Schenkel des leicht flexiblen Adapterelements 24 zusammengedrückt und in die Montagenut 15 eingeführt. In der Montagenut 15 stellen sich die Schenkel aufgrund der Rückstellkräfte wieder in ihre ursprüngliche Form zurück und verrasten so das Adapterelement 24 in der Montagenut 15.

Die LED-Bänder 9,10 sind jeweils in einer Adapternut 27 des entsprechenden Adapterelements 24 gehalten, wobei sich die Adapternut 27 wenigstens im Wesentlichen über die gesamte Länge des Adapterelements 24 erstreckt. Die LED-Bänder 9,10 sind vorliegend wenigstens im Wesentlichen in den Adapternuten 27 aufgenommen. Dabei hintergreifen die Gehäuse 23 der LED-Bänder 9,10 jeweils zwei auf gegenüberliegenden Längsseiten der Adapternut 27 angeordnete Hinterschneidungen 28 der Adapternut 27. Auf diese Weise sind die LED-Bänder 9,10 vorliegend formschlüssig in den Adapternuten 27 gehalten. Zudem können die LED-Bänder 9,10 in den Adapternuten 27 verklebt sein.

Zur Montage eines LED-Bands 9,10 in einer Adapternut 27 wird das LED-Band 9,10 in die Öffnung der Adapternut 27 gedrückt, wodurch die leicht flexiblen Schenkel des Adapterelements 24 nach außen gedrückt werden. Sobald das LED-Band 9,10 in die Adapternut 27 eingeführt ist, kehren die Schenkel des Adapterelements 24 aufgrund der Rückstellkräfte zurück in ihre ursprüngliche Form und verrasten so das LED-Band 9,10 in der Adapternut 27. Insbesondere bei langen LED-Bänder 9,10 kann es sich anbieten, wenn die Leiterplatte 22 flexibel ist. Dann kann nämlich das LED-Band 9,10 entlang seiner Längsachse Abschnitt für Abschnitt in die Adapternut 27 eingedrückt werden.

Die Profilelemente 7,8 weisen an ihrem dem jeweils anderen Profilelement 7,8 zugewandten Rand jeweils einen Randabschnitt 29 auf, der an einer der Umgebung U zugewandten, vorliegend durch die äußere Decklage 12 bereitgestellten Außenseite 30 des Seitenwandpaneels 11 anliegt. Dabei sind die Randabschnitte 29 zur Erhöhung der Stabilität im Anlagebereich mit dem Seitenwandpaneel 11 verklebt.

An ihrem von dem jeweils anderen Profilelement 7,8 abgewandten Längsrand weisen die Profilemente 7,8 jeweils einen Randabschnitt 31 auf, der einen sich in Längsrichtung des entsprechenden Profilelements 7,8 erstreckenden Aufnahmeraum 32 begrenzt. Die Aufnahmeräume 32 dienen der Aufnahme von überschüssigem Klebstoff. Dabei dient der durch das obere Profilelement 7 gebildete Aufnahmeraum 32 insbesondere zur Aufnahme von Klebstoff aus einer Klebeverbindung 33 zwischen dem oberen Proflelement 7 und einem das Dach 6 nach oben abschließenden Dachprofil 35. Der durch das untere Profilelement 8 gebildete Aufnahmeraum 32 dient insbesondere zur Aufnahme von Klebstoff aus einer Klebeverbindung 34 zwischen dem unteren Profilelement 8 und einem den Boden 14 nach unten abschließenden Bodenprofil 36.

Die Aufnahmeräume 32 weisen jeweils eine Aufnahmeöffnung 37 auf, die der entsprechenden Klebeverbindung 33,34 zugewandt ist, sodass der beim Fügen der Klebeverbindung 33,34 überschüssige Klebstoff ungehindert in den Aufnahmeraum 32 einfließen und dort austrocknen kann. Dies kann zu einer Aussteifung der Profilelemente 7,8 und einer seitlichen Abstützung der an die Aufnahmeräume 32 jeweils angrenzende Montagenut 15 beitragen.

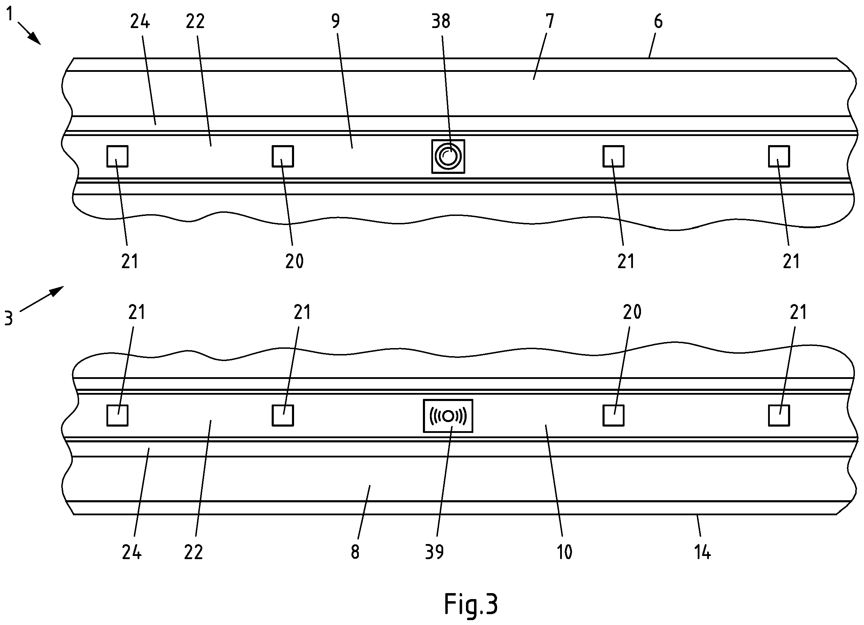

In der Fig. 3 sind Details des Nutzfahrzeugaufbaus 1 im Bereich eines oberen und eines unteren Randbereichs einer der Seitenwände 3 in einer Seitenansicht dargestellt. Die sich entlang der Profilelemente 7,8 erstreckenden LED-Bänder 9,10 weisen jeweils eine Vielzahl von Umfeldbeleuchtungsleuchtmitteln 21 auf, die in Längsrichtung des LED-Bands 9,10 in wenigstens im Wesentlichen regelmäßigen Abständen verteilt angeordnet sind. Zudem weisen die LED-Bänder 9,10 jeweils eine Mehrzahl von Konturmarkierungsleuchtmitteln 20 auf, die vorliegend ebenfalls in wenigstens im Wesentlichen regelmäßigen Abständen in Längsrichtung des LED-Bands 9,10 verteilt angeordnet, jedoch weiter voneinander beabstandet sind als die Umfeldbeleuchtungsleuchtmittel 21.

Neben den LED-Leuchtmitteln 20,21 weisen die LED-Bänder 9,10 im dargestellten und insoweit bevorzugten Ausführungsbeispiel jeweils mehrere Kameras 38 zum Erfassen von Bildern der Umgebung U und/oder des Nutzfahrzeugs N sowie mehrere Sensoren 39 in Form von Abstandssensoren und Bewegungssensoren auf. Die Kameras 38 und die Sensoren 39 sind jeweils an der Leiterplatte 22 des entsprechenden LED-Bands 9,10 angebracht und werden über die Leiterplatte 22 mit elektrischem Strom versorgt.

### Bezugszeichenliste

- 1: Nutzfahrzeugaufbau
- 2: Stirnwand
- 3: Seitenwand
- 4: Rückwand
- 5: Rückwandtür
- 6: Dach
- 7: oberes Profilelement
- 8: unteres Profilelement
- 9,10: Funktionselement, LED-Band
- 11: Seitenwandpaneel
- 12: Decklage
- 13: Kernlage
- 14: Boden
- 15: Montagenut
- 16: Nutgrund
- 17: Montageöffnung
- 18,19: Längsränder
- 20: LED-Leuchtmittel, Konturmarkierungsleuchtmittel
- 21: LED-Leuchtmittel, Umfeldbeleuchtungsleuchtmittel
- 22: Leiterplatte
- 23: Gehäuse
- 24: Adapterelement
- 25,26: Hinterschneidung einer Montagenut
- 27: Adapternut
- 28: Hinterschneidung einer Adapternut
- 29: Randabschnitt eines Profilelements
- 30: Außenseite eines Seitenwandpaneels
- 31: Randabschnitt eines Profilelements
- 32: Aufnahmeraum
- 33,34: Klebeverbindung
- 35: Dachprofil
- 36: Bodenprofil
- 37: Aufnahmeöffnung
- 38: Kamera
- 39: Sensor

- N: Nutzfahrzeug
- RS: Hauptabstrahlrichtung
- U: Umgebung
- Z: Zugmaschine

## Patentansprüche

1. Nutzfahrzeugaufbau (1), insbesondere Kofferaufbau (1), vorzugsweise für einen Lastkraftwagen, Anhänger oder Sattelauflieger, mit wenigstens einem sich wenigstens im Wesentlichen in Längsrichtung und/oder Querrichtung des Nutzfahrzeugaufbaus (1) erstreckenden Profilelement (7,8) und mit wenigstens einem von außerhalb des Nutzfahrzeugaufbaus (1) an dem wenigstens einen Profilelement (7,8) montierten, insbesondere elektrischen, Funktionselement (9,10), insbesondere Seitenmarkierungsleuchte und/oder Umfeldbeleuchtung, wobei das wenigstens eine Funktionselement (9,10) in wenigstens einer nach außen offenen und sich in Längsrichtung des Profilelements (7,8) erstreckenden Montagenut (15) des Profilelements (7,8) gehalten ist,
**dadurch gekennzeichnet, dass**
das wenigstens eine Profilelement (7,8) wenigstens ein wenigstens im Wesentlichen in einem oberen Drittel, insbesondere oberen Viertel, des Nutzfahrzeugaufbaus (1) angeordnetes oberes Profilelement (7) umfasst.

2. Nutzfahrzeugaufbau nach Anspruch 1,
**dadurch gekennzeichnet, dass**
wenigstens ein wenigstens im Wesentlichen in einem unteren Drittel, insbesondere unteren Viertel, des Nutzfahrzeugsaufbaus (1) angeordnetes unteres Profilelement (8) vorgesehen ist, dass, vorzugsweise, wenigstens ein Querschnitt der wenigstens einen Montagenut (15) des oberen Profilelements (7) und wenigstens ein Querschnitt der wenigstens einen Montagenut (15) des unteren Profilelements (8) wenigstens im Wesentlichen gleich ausgebildet sind und dass, weiter vorzugsweise, wenigstens ein Querschnitt des oberen Profilelements (7) und wenigstens ein Querschnitt des unteren Profilelements (8) wenigstens im Wesentlichen gleich ausgebildet sind.

3. Nutzfahrzeugaufbau nach Anspruch 1 oder 2,
**dadurch gekennzeichnet, dass**
das wenigstens eine Profilelement (7,8) ein Wandprofil einer Wand (2,3,4), insbesondere Seitenwandprofil einer Seitenwand (3), des Nutzfahrzeugaufbaus (1) ist und/oder dass das wenigstens eine obere Profilelement (7) an einem oberen Rand und/oder das wenigstens eine untere Profilelement (8) an einem unteren Rand einer Wand (2,3,4), insbesondere Seitenwand (3), des Nutzfahrzeugaufbaus (1) angeordnet ist.

4. Nutzfahrzeugaufbau nach einem der Ansprüche 1 bis 3,
**dadurch gekennzeichnet, dass**
die wenigstens eine Montagenut (15) wenigstens im Wesentlichen in horizontaler Richtung bezogen auf den Nutzfahrzeugaufbau (1) geöffnet ist und/oder dass sich die wenigstens eine Montagenut (15) in Richtung einer Montageöffnung (17) der Montagenut (15) wenigstens abschnittsweise verjüngt.

5. Nutzfahrzeugaufbau nach einem der Ansprüche 1 bis 4,
**dadurch gekennzeichnet, dass** gegenüberliegende Längsränder (18,19) einer Montageöffnung (17) der wenigstens einen Montagenut (15) unterschiedlich weit von einem Nutgrund (16) der Montagenut (15) beabstandet angeordnet sind und dass, vorzugsweise, der den geringeren Abstand zum Nutgrund (16) aufweisende Längsrand (18) bei dem wenigstens einen oberen Profilelement (7) den oberen Rand der Montageöffnung (17) bildet und/oder bei dem wenigstens einen unteren Profilelement (8) den unteren Rand der Montageöffnung (17) bildet.

6. Nutzfahrzeugaufbau nach einem der Ansprüche 1 bis 5,
**dadurch gekennzeichnet, dass**
das wenigstens eine Profilelement (7,8) wenigstens einen, insbesondere sich in Längsrichtung des Profilelements (7,8) erstreckenden, Aufnahmeraum (32) zur Aufnahme von überschüssigem Klebstoff wenigstens einer Klebeverbindung (33,34) wenigstens abschnittsweise, insbesondere wenigstens im Wesentlichen, begrenzt und dass, vorzugsweise, der wenigstens eine Aufnahmeraum (32) wenigstens eine, insbesondere sich in Längsrichtung des Profilelements (7,8) erstreckende und/oder der Klebeverbindung (33,34) zugewandte, Aufnahmeöffnung (37) zum Einfließen von überschüssigem Klebstoff in den Aufnahmeraum (32) aufweist.

7. Nutzfahrzeugaufbau nach Anspruch 6,
**dadurch gekennzeichnet, dass**
der wenigstens eine Aufnahmeraum (32) wenigstens teilweise, insbesondere wenigstens im Wesentlichen, mit Klebstoff gefüllt ist und/oder dass der wenigstens eine Aufnahmeraum (32) an die Montagenut (15) des Profilelements (7,8) angrenzt, insbesondere wenigstens einen gemeinsamen Profilabschnitt des Profilelements (7,8) mit der Montagenut (15) aufweist, und/oder dass der wenigstens eine Aufnahmeraum (32) von einem sich in Längsrichtung des Profilelements (7,8) erstreckenden Randabschnitt (31) des Profilelements (7,8) begrenzt wird.

8. Nutzfahrzeugaufbau nach einem der Ansprüche 1 bis 7,
**dadurch gekennzeichnet, dass**
wenigstens ein sich in Längsrichtung des wenigstens einen Profilelements (7,8) erstreckender Randabschnitt (29) des Profilelements (7,8) an einer Außenseite (30) eines Wandpaneels (11) einer Wand (2,3,4), insbesondere Seitenwand (3), des Nutzfahrzeugaufbaus (1) anliegt.

9. Nutzfahrzeugaufbau nach einem der Ansprüche 1 bis 8,
**dadurch gekennzeichnet, dass**
sich das wenigstens eine Profilelement (7,8) wenigstens im Wesentlichen über die gesamte Länge und/oder Breite des Nutzfahrzeugaufbaus (1) erstreckt und/oder dass sich die wenigstens eine Montagenut (15) wenigstens im Wesentlichen über die gesamte Länge des wenigstens einen Profilelements (7,8) erstreckt.

10. Nutzfahrzeugaufbau nach einem der Ansprüche 1 bis 9,
**dadurch gekennzeichnet, dass**
das wenigstens eine Funktionselement (9,10) wenigstens ein Konturmarkierungsleuchtmittel (20), wenigstens ein Umfeldbeleuchtungsleuchtmittel (21), wenigstens eine Kamera (38), wenigstens einen Sensor (39), insbesondere Abstandssensor und/oder Bewegungssensor, und/oder wenigstens ein eine Mehrzahl von LED-Leuchtmitteln (20,21) umfassendes LED-Band (9,10) umfasst.

11. Nutzfahrzeugaufbau nach einem der Ansprüche 1 bis 10,
**dadurch gekennzeichnet, dass**
das wenigstens eine Funktionselement (9,10) formschlüssig in der wenigstens einen Montagenut (15) gehalten ist und/oder dass das wenigstens eine Funktionselement (9,10) stoffschlüssig in der wenigstens einen Montagenut (15) gehalten, insbesondere verklebt, ist.

12. Nutzfahrzeugaufbau nach einem der Ansprüche 1 bis 11,
**dadurch gekennzeichnet, dass**
das wenigstens eine Funktionselement (9,10) über wenigstens ein, insbesondere sich in Längsrichtung der Montagenut (15) erstreckendes und/oder aus einem Kunststoff hergestelltes, Adapterelement (24), insbesondere Adapterprofil, in der Montagenut (15) gehalten ist und dass, vorzugsweise, das wenigstens eine Funktionselement (9,10) in wenigstens einer sich in Längsrichtung des Adapterelements (24) erstreckenden Adapternut (27) des Adapterelements (24) gehalten, insbesondere wenigstens im Wesentlichen aufgenommen, ist.

13. Nutzfahrzeugaufbau nach einem der Ansprüche 1 bis 12,
**dadurch gekennzeichnet, dass**
das wenigstens eine Funktionselement (9,10) und/oder das wenigstens eine Adapterelement (24) wenigstens eine Hinterschneidung (25,26) der wenigstens einen Montagenut (15) formschlüssig hintergreift und/oder in die wenigstens eine Montagenut (15) eingerastet ist und/oder dass das wenigstens eine Funktionselement (9,10) wenigstens eine Hinterschneidung (28) der wenigstens einen Adapternut (27) formschlüssig hintergreift und/oder in die wenigstens eine Adapternut (27) eingerastet ist.

## Geänderte Patentansprüche

### Geänderte Patentansprüche gemäss Regel 137(2) EPÜ.

1. Nutzfahrzeugaufbau (1), insbesondere Kofferaufbau (1), vorzugsweise für einen Lastkraftwagen, Anhänger oder Sattelauflieger, mit wenigstens einem sich wenigstens im Wesentlichen in Längsrichtung und/oder Querrichtung des Nutzfahrzeugaufbaus (1) erstreckenden Profilelement (7,8) und mit wenigstens einem von außerhalb des Nutzfahrzeugaufbaus (1) an dem wenigstens einen Profilelement (7,8) montierten, insbesondere elektrischen, Funktionselement (9,10), insbesondere Seitenmarkierungsleuchte und/oder Umfeldbeleuchtung, wobei das wenigstens eine Funktionselement (9,10) in wenigstens einer nach außen offenen und sich in Längsrichtung des Profilelements (7,8) erstreckenden Montagenut (15) des Profilelements (7,8) gehalten ist und wobei das wenigstens eine Profilelement (7,8) wenigstens ein wenigstens im Wesentlichen in einem oberen Drittel, insbesondere oberen Viertel, des Nutzfahrzeugaufbaus (1) angeordnetes oberes Profilelement (7) umfasst,
**dadurch gekennzeichnet, dass**
wenigstens ein wenigstens im Wesentlichen in einem unteren Drittel des Nutzfahrzeugsaufbaus (1) angeordnetes unteres Profilelement (8) vorgesehen ist und dass wenigstens ein Querschnitt der wenigstens einen Montagenut (15) des oberen Profilelements (7) und wenigstens ein Querschnitt der wenigstens einen Montagenut (15) des unteren Profilelements (8) wenigstens im Wesentlichen gleich ausgebildet sind.

2. Nutzfahrzeugaufbau nach Anspruch 1,
**dadurch gekennzeichnet, dass**
das wenigstens eine untere Profilelement (8) wenigstens im Wesentlichen in einem unteren Viertel des Nutzfahrzeugsaufbaus (1) angeordnet ist und/oder dass wenigstens ein Querschnitt des oberen Profilelements (7) und wenigstens ein Querschnitt des unteren Profilelements (8) wenigstens im Wesentlichen gleich ausgebildet sind.

3. Nutzfahrzeugaufbau nach Anspruch 1 oder 2,
**dadurch gekennzeichnet, dass**
das wenigstens eine Profilelement (7,8) ein Wandprofil einer Wand (2,3,4), insbesondere Seitenwandprofil einer Seitenwand (3), des Nutzfahrzeugaufbaus (1) ist und/oder dass das wenigstens eine obere Profilelement (7) an einem oberen Rand und/oder das wenigstens eine untere Profilelement (8) an einem unteren Rand einer Wand (2,3,4), insbesondere Seitenwand (3), des Nutzfahrzeugaufbaus (1) angeordnet ist.

4. Nutzfahrzeugaufbau nach einem der Ansprüche 1 bis 3,
**dadurch gekennzeichnet, dass**
die wenigstens eine Montagenut (15) wenigstens im Wesentlichen in horizontaler Richtung bezogen auf den Nutzfahrzeugaufbau (1) geöffnet ist und/oder dass sich die wenigstens eine Montagenut (15) in Richtung einer Montageöffnung (17) der Montagenut (15) wenigstens abschnittsweise verjüngt.

5. Nutzfahrzeugaufbau nach einem der Ansprüche 1 bis 4,
**dadurch gekennzeichnet, dass** gegenüberliegende Längsränder (18,19) einer Montageöffnung (17) der wenigstens einen Montagenut (15) unterschiedlich weit von einem Nutgrund (16) der Montagenut (15) beabstandet angeordnet sind und dass, vorzugsweise, der den geringeren Abstand zum Nutgrund (16) aufweisende Längsrand (18) bei dem wenigstens einen oberen Profilelement (7) den oberen Rand der Montageöffnung (17) bildet und/oder bei dem wenigstens einen unteren Profilelement (8) den unteren Rand der Montageöffnung (17) bildet.

6. Nutzfahrzeugaufbau nach einem der Ansprüche 1 bis 5,
**dadurch gekennzeichnet, dass**
das wenigstens eine Profilelement (7,8) wenigstens einen, insbesondere sich in Längsrichtung des Profilelements (7,8) erstreckenden, Aufnahmeraum (32) zur Aufnahme von überschüssigem Klebstoff wenigstens einer Klebeverbindung (33,34) wenigstens abschnittsweise, insbesondere wenigstens im Wesentlichen, begrenzt und dass, vorzugsweise, der wenigstens eine Aufnahmeraum (32) wenigstens eine, insbesondere sich in Längsrichtung des Profilelements (7,8) erstreckende und/oder der Klebeverbindung (33,34) zugewandte, Aufnahmeöffnung (37) zum Einfließen von überschüssigem Klebstoff in den Aufnahmeraum (32) aufweist.

7. Nutzfahrzeugaufbau nach Anspruch 6,
**dadurch gekennzeichnet, dass**
der wenigstens eine Aufnahmeraum (32) wenigstens teilweise, insbesondere wenigstens im Wesentlichen, mit Klebstoff gefüllt ist und/oder dass der wenigstens eine Aufnahmeraum (32) an die Montagenut (15) des Profilelements (7,8) angrenzt, insbesondere wenigstens einen gemeinsamen Profilabschnitt des Profilelements (7,8) mit der Montagenut (15) aufweist, und/oder dass der wenigstens eine Aufnahmeraum (32) von einem sich in Längsrichtung des Profilelements (7,8) erstreckenden Randabschnitt (31) des Profilelements (7,8) begrenzt wird.

8. Nutzfahrzeugaufbau nach einem der Ansprüche 1 bis 7,
**dadurch gekennzeichnet, dass**
wenigstens ein sich in Längsrichtung des wenigstens einen Profilelements (7,8) erstreckender Randabschnitt (29) des Profilelements (7,8) an einer Außenseite (30) eines Wandpaneels (11) einer Wand (2,3,4), insbesondere Seitenwand (3), des Nutzfahrzeugaufbaus (1) anliegt.

9. Nutzfahrzeugaufbau nach einem der Ansprüche 1 bis 8,
**dadurch gekennzeichnet, dass**
sich das wenigstens eine Profilelement (7,8) wenigstens im Wesentlichen über die gesamte Länge und/oder Breite des Nutzfahrzeugaufbaus (1) erstreckt und/oder dass sich die wenigstens eine Montagenut (15) wenigstens im Wesentlichen über die gesamte Länge des wenigstens einen Profilelements (7,8) erstreckt.

10. Nutzfahrzeugaufbau nach einem der Ansprüche 1 bis 9,
**dadurch gekennzeichnet, dass**
das wenigstens eine Funktionselement (9,10) wenigstens ein Konturmarkierungsleuchtmittel (20), wenigstens ein Umfeldbeleuchtungsleuchtmittel (21), wenigstens eine Kamera (38), wenigstens einen Sensor (39), insbesondere Abstandssensor und/oder Bewegungssensor, und/oder wenigstens ein eine Mehrzahl von LED-Leuchtmitteln (20,21) umfassendes LED-Band (9,10) umfasst.

11. Nutzfahrzeugaufbau nach einem der Ansprüche 1 bis 10,
**dadurch gekennzeichnet, dass**
das wenigstens eine Funktionselement (9,10) formschlüssig in der wenigstens einen Montagenut (15) gehalten ist und/oder dass das wenigstens eine Funktionselement (9,10) stoffschlüssig in der wenigstens einen Montagenut (15) gehalten, insbesondere verklebt, ist.

12. Nutzfahrzeugaufbau nach einem der Ansprüche 1 bis 11,
**dadurch gekennzeichnet, dass**
das wenigstens eine Funktionselement (9,10) über wenigstens ein, insbesondere sich in Längsrichtung der Montagenut (15) erstreckendes und/oder aus einem Kunststoff hergestelltes, Adapterelement (24), insbesondere Adapterprofil, in der Montagenut (15) gehalten ist und dass, vorzugsweise, das wenigstens eine Funktionselement (9,10) in wenigstens einer sich in Längsrichtung des Adapterelements (24) erstreckenden Adapternut (27) des Adapterelements (24) gehalten, insbesondere wenigstens im Wesentlichen aufgenommen, ist.

13. Nutzfahrzeugaufbau nach einem der Ansprüche 1 bis 12,
**dadurch gekennzeichnet, dass**
das wenigstens eine Funktionselement (9,10) und/oder das wenigstens eine Adapterelement (24) wenigstens eine Hinterschneidung (25,26) der wenigstens einen Montagenut (15) formschlüssig hintergreift und/oder in die wenigstens eine Montagenut (15) eingerastet ist und/oder dass das wenigstens eine Funktionselement (9,10) wenigstens eine Hinterschneidung (28) der wenigstens einen Adapternut (27) formschlüssig hintergreift und/oder in die wenigstens eine Adapternut (27) eingerastet ist.
